# EUROPEAN PATENT SPECIFICATION

(11) **EP 3 042 846 B1**
(45) Date of publication and mention of the grant of the patent: **18.09.2019**
(21) Application number: 15150721.7
(22) Date of filing: 12.01.2015
(51) Int. Cl.: B64C 1/18, B64F 5/00

(54) **Floor arrangement with curved floor panels for an aircraft**
Bodenanordnung mit gekrümmten Bodenplatten für ein Flugzeug
Dispositif de plancher avec des panneaux de plancher incurvés pour un avion

(43) Date of publication of application: 13.07.2016
(73) Proprietor: Airbus Operations GmbH, 21129 Hamburg (DE)
(72) Inventor: Eilken, Wolfgang, 21129 Hamburg (DE); Tiryaki, Memis, 21129 Hamburg (DE); Bolbrinker, Marcus, 21129 Hamburg (DE)
(74) Representative: Isarpatent

(56) References cited:
- EP-A1- 0 056 371
- GB-A- 1 311 202
- US-A1- 2006 038 071
- US-A1- 2013 306 794

## Description

The present invention pertains to a floor arrangement for a passenger cabin of an aircraft or spacecraft.

Although applicable to any kind of aircraft or spacecraft or the like, the present invention and the problem on which it is based will be explained in greater detail with reference to floor arrangements of commercial aircraft.

On commercial aircraft, mounting rails made from metal or composite materials are installed in the floors of passenger cabins for fastening of cabin outfitting components, like for example seats, galleys, or lavatories. One widely used type of mounting rail is formed with a profile in the shape of an "I", as it is for example disclosed in document DE 102009039581 A1. This type of mounting rail features horizontal upper and lower flanges that are connected by a vertical web element. On the top of the mounting rail, a crown with a C-like profile is arranged which comprises an opening that points upwards into the passenger cabin between two inward-projecting limbs that comprise holes and slits in alternating succession. Here, the crown forms a slide intended for fixing the cabin outfitting components.

In addition to fixing passenger seats and the like, mounting rails are usually configured to mount and stabilize floor panels that form the floor of the passenger cabin. Hereby, two adjacent mounting rails together support a row of floor panels that are arranged in between the mounting rails one after the other alongside the length of the rails. Typically, each floor panel rests with its side edges on the upper flanges of the mounting rails in such a configuration that floor panels and rail crowns form a flat surface, as shown for example in document EP 0056371 A1.

Floor panels are usually made of a composite sandwich honeycomb-like structure with a thickness in the order of up to a few centimeter. The floor panels rest on the upper flanges of the mounting rails and are furthermore fixed to the upper flanges by bolts or the like. Due to assembly requirements, a small gap usually remains in between the floor panels and the seat rail crowns. In order to mitigate corrosion phenomena and the like due to liquids entering the gaps, often a sealing is placed into the gaps. For example, a closed-cell foam profile can be glued to the bottom of the floor panel and its lateral surfaces, which is then compressed during installation and thereby becomes impermeable to water and other liquids.

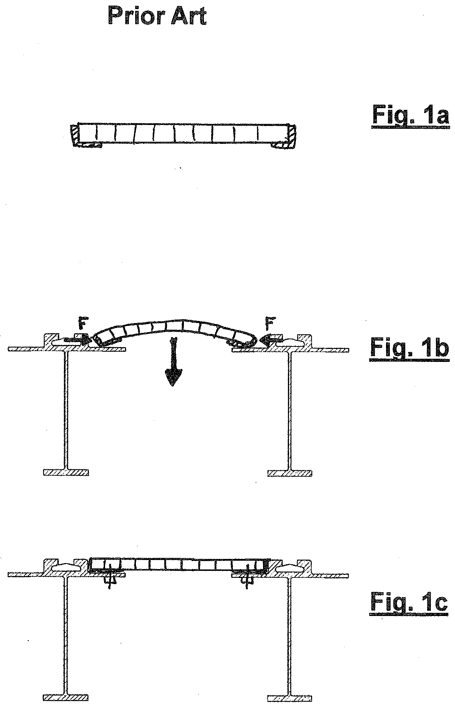

Figs. 1a to 1c schematically illustrate in cross-sectional view the installation of a typical floor arrangement of a passenger cabin. A floor panel has a generally rectangular shape with flat top and bottom surfaces and a honeycomb structure in between. A sealing is glued to left and right side edges and the bottom surface of the floor panel. Fig. 1a shows the standalone floor panel before the installation, whereas Fig. 1b illustrates the installation of the floor panel. For the installation, inward forces F are applied to both side edges of the floor panel and the floor panel is slightly bend upwards. Like this, the top surface of the floor panel forms a convex surface and the bottom surface of the floor panel forms a concave surface and hence the horizontal width of the floor panel is reduced. While being bent, the floor panel is carefully brought down in between the upper flanges of two adjacent mounting rails. As soon as the floor panel rests on the upper flanges of the mounting rails, the inward forces are dropped and the floor panel consequently snaps back into its former unbent shape, thereby compressing the sealing in between the mounting rails and the floor panel. Thus, a tight and gapless fit between floor panel and mounting rails is achieved. The result of this is shown on Fig. 1c. Without bending, it would be difficult to bring an appropriately sized floor panel with attached sealing into the position in between the mounting rails. In a final installation step, the floor panel is fixed to the mounting rails by fasteners like bolts or the like. For deinstallation, e.g. during maintenance, the fasteners are removed and the floor panel is forced upwards. For this, typically, external tools have to be used in a careful way in order to avoid damages to the floor panel or the mounting rails.

Against this background, it is one object of the present invention to provide a floor for a passenger cabin that is simple to install and deinstall.

This object is solved by a floor arrangement for a passenger cabin of an aircraft or spacecraft according to claim 1. The floor arrangement comprises mounting rails for mounting cabin outfitting components, wherein each mounting rail comprises at least one upper support flange for supporting floor panels. The floor arrangement further comprises curved floor panels being inherently formed with a convex top surface and a concave bottom surface, wherein each inherently curved floor panel is mounted to two respective adjacent mounting rails. Here, each curved floor panel is supported by one respective upper support flange of each of the two adjacent mounting rails.

One idea of the present invention is to provide an inherently curved floor panel to avoid having to bend a flat floor panel in the installation process of a floor arrangement. The curved floor panel can be directly mounted in between two adjacent mounting rails without any additional efforts, as for example load applications. Hence, the floor arrangement according to the present invention is easy to install. The floor panel can then be fastened to the mounting rails in the usual way, e.g. by bolting it to the flanges of the mounting rails from beneath the floor, which then automatically flattens the floor panels. Any remaining curvature of the floor panels is reduced by any cabin component put on top of the floor arrangement. Consequently, also the deinstallation of such floor panels is simple. After having removed the fastening bolts during deinstallation, the floor panel according to the present invention by itself resumes its original inherent curved shape and thus automatically bends upwards for easy removal. Hence, damages that might be inflicted on the floor panel by external tools during installation or deinstallation are avoided.

Advantageous embodiments and improvements of the present invention are found in the subordinate claims.

According to an embodiment of the invention, each curved floor panel is formed with two straight side edges, each of which rests on one respective upper support flange of the two respective adjacent mounting rails. In this embodiment, the curved floor panel has a very convenient shape for facilitating quick and straightforward installation and deinstallation. The curved floor panel simply has to be placed with its side edges on top of the upper flanges of two adjacent mounting rails. Next, it can be fixed by bolts or the like.

According to another embodiment of the invention, the convex top surface of the curved floor panel or the concave bottom surface or both of them are curved according to a section of a circumferential surface of a circular cylinder. In particular in combination with two straight side edges, the curved floor panels thus has a very simple shape that can be easily installed and produced in various production processes.

According to yet another embodiment of the invention, each curved floor panel is flattened through fastening of the curved floor panel under tension to the two respective adjacent mounting rails.

According to yet another embodiment of the invention, each flattened curved floor panel has a vertical rise in between its side edges of less than 10 millimeters. The curvature of the floor panel is thus only very small and hence will not be noticeable in any relevant way after cabin installation, i.e. after the floor panels have been bolted to the flanges and cabin outfitting components have been put on top of the floor arrangement.

The curved floor panels may be formed as a composite lay-up structure. Within the usual production steps of composite lay-up structures, a curved floor panel can be easily ensured by pre-defining a bending through asymmetrical choice of upper and lower layers of the composite structure. For example, the widths, thicknesses and strengths of the individual layers can be chosen so as to achieve a pre-defined deflection of the layers with respect to a flat layer. Usually, common practice teaches to construct composite layers as symmetrical as possible with respect to each other in order to avoid any bending or asymmetries in the final structure. In this embodiment of the invention, the layers are deliberately chosen in an asymmetric way with respect to each other during production in order to achieve a pre-defined bending of the floor panel.

The curved floor panels may further be formed from fiber-reinforced plastic. Fiber-reinforced plastic has many advantages compared to other materials, like for example metal. It is lightweight and can be produced in a relatively cost-efficient way. Complicated stiffened composite structures can be produced without much effort.

The curved floor panels may yet further be preformed into a curved configuration and hardened in an autoclave process. Like this, for example, a floor panel made from a fiber-reinforced plastic can be brought into a curved configuration already "on the assembly line". The curved configuration is then made permanent in the subsequent autoclave process.

The curved floor panels may be formed with a honeycomb structure between the top surface and the bottom surface. A honeycomb-like structured floor panel has many advantages, like for example a larger stiffness with high break resistance and a high elasticity modulus as well as better sound absorption characteristics than commonly structured floor panels.

According to another embodiment of the invention, a sealing is located between the upper support flanges of the mounting rails and the curved floor panels. The purpose of the sealing is to close any remaining space in between the curved floor panel and the flanges of the mounting rails. For example, otherwise fluids or moisture could enter any remaining openings and induce long-term corrosion damage to the rails or the floor panels.

The sealing may be formed as a foam profile that has an open-cell or closed-cell structure. Using a foam sealing has the advantage that the foam is compressible during installation of the floor panel. On the one hand, the foam protects both the flanges and the floor panels from any direct damage due to bumping or rattling against each other. On the other hand, the compressed foam functions as an impermeable barrier for any fluid that might enter the space in between the flanges and the floor panels. In addition to these benefits, this solution grants a good relative movement during flight, taking temperature and load deformations into account.

The sealing may be adhesively fixed to the curved floor panels. Thus, for example a foam profile may be glued to the side edges and the bottom surface of a floor panel before installation. The foam is then compressed during installation in order to ensure tightness.

According to another embodiment of the invention, fasteners fix the curved floor panels to the upper support flanges of the mounting rails. The fasteners may be formed as bolts, screws, rivets, pins or plugs or the like. As soon as the curved floor panels have been mounted in between the mounting rails any relative movement between floor panel and mounting rails is prohibited by the fasteners. In addition, the fastener arrangement may be chosen in such a way that the tension forces applied by the fasteners flatten the floor panels into a flat or nearly flat shape. Hence, the final floor arrangement might retrain only a very slight bending or no curvature at all, so that further cabin installation or passenger convenience is not affected by the inherently curved floor panels.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

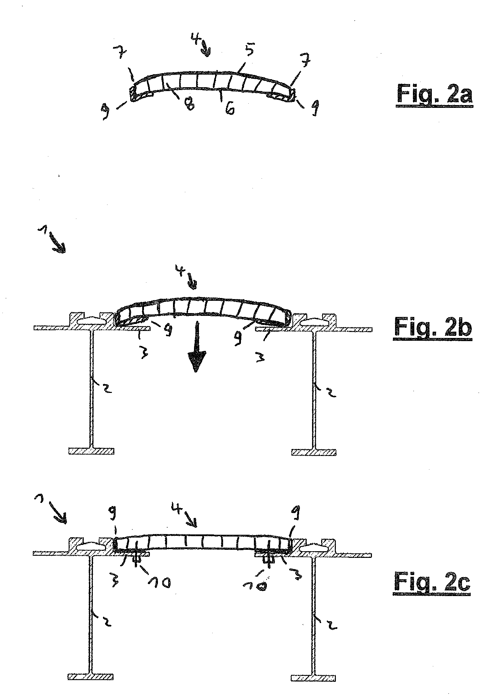

Figs. 2a to 2c schematically illustrate a cross-sectional view of a floor arrangement according to an embodiment of the invention.

In the figures, reference sign 1 denotes a floor arrangement for a passenger cabin of an aircraft. The floor arrangement 1 comprises two adjacent mounting rails 2, e.g. for mounting seats to the aircraft floor. Furthermore the floor arrangement 1 comprises a plurality of curved floor panels 4, one of which is shown in the figures. The mounting rails may be made from titanium or cheaper aluminum alloys.

Fig. 2a depicts a curved floor panel 4 before installation in the floor arrangement 1. The curved floor panel 4 has a convex top surface 5 and a concave bottom surface 6 and two straight side edges 7. Both top surface 5 and bottom surface 6 are formed according to the curvature of a circumferential surface of a circular cylinder. Generally, the curved floor panel 4 is somewhat comparable in shape to an inherently flat and rectangular floor panel that is bend upwards by forces applied to the side edges pointing inwards to the center of the panel. However, in this embodiment of the invention the curvature is inherent to the floor panel 4. Little to no force has to be applied in order to achieve or maintain the curvature. It should be noted that the invention is not limited to the described shape of curved floor panels 4 but can be applied similarly to more general curved floor panels 4 that are curved according to more complex shapes than circular cylinders. The described embodiments are of purely exemplary nature.

In between top surface 5 and bottom surface 6, a honeycomb structure 8 is formed. The floor panel 4 is formed from fiber-reinforced plastic in a composite lay-up structure, e.g. carbon fiber-reinforced polymer. The curvature is achieved by performing the floor panel 4 into a curved configuration in the assembly and hardening the configuration in a subsequent autoclave process. An alternative way of producing such a curved floor panel 4 would be to deliberately chose the individual layers in an asymmetric way with respect to the layer width, thickness and/or strength. In the present embodiment however, the layers themselves can be inherently symmetric to each other. The bending is achieved by applying a load to the floor panel 4 in the assembly before the autoclave.

Sealings 9 are glued to the straight left and right side edges 7 as well as the bottom surface 6 of the floor panel 4. Each sealing 9 is formed from a closed-cell foam profile. The foam can be made in a flexible, semi-rigid way for example from plastics like extruded Polyethylene, Polypropylene or similar lightweight and cost-effective thermoplastic or other materials with high strength and good shock/vibration absorption properties.

Fig. 2b illustrates the installation of the curved floor panel 4 from Fig. 2a. In contrast to the installation of a flat floor panel according to Figs. 1a to 1c, here no inward forces F have to be applied to both side edges of the floor panel 4. The floor panel 4 according to the present invention is inherently curved and thus can simply be place on top of the flanges 3 of the two depicted mounting rails 2. As soon as the curved floor panel 4 rests on the upper flanges 3 of the mounting rails 2, the floor panel 4 is fixed to the mounting rails 2 by fasteners 10 like bolts or similar (this is shown on Fig. 2c). Through the tension of the fasteners 10, a tight and gapless fit between curved floor panel 4 and mounting rails 2 is achieved. The sealing 9 is simultaneously compressed to a fraction of its original expansion and hence no fluid or the like can enter the space in between the curved floor panel 4 and the upper flanges 3 of the mounting rails 2.

The installation of this kind of curved floor panel 4 is thus possible without having to apply any bending loads to the floor panel 4 and hence is much simpler and failsafe. In addition, also the deinstallation is straightforward. As soon as the fasteners 10 have been removed, the floor panel 4 by itself gets back into its original inherent curved shape with a shortened width. Hence, it can be easily removed from the rails 2 without any additional tooling effort and without risk of damage. This saves maintenance costs and time.

### List of reference signs

- 1: floor arrangement
- 2: mounting rail
- 3: upper support flange
- 4: curved floor panel
- 5: top surface
- 6: bottom surface
- 7: side edge
- 8: honeycomb structure
- 9: sealing
- 10: fastener

## Claims

1. Floor arrangement (1) for a passenger cabin of an aircraft or spacecraft, comprising:
mounting rails (2) for mounting cabin outfitting components, wherein each mounting rail (2) comprises at least one upper support flange (3) for supporting floor panels (4); and
curved floor panels (4) being inherently formed with a convex top surface (5) and a concave bottom surface (6), wherein each inherently curved floor panel (4) is mounted to two respective adjacent mounting rails (2) and is supported by one respective upper support flange (3) of each of the two adjacent mounting rails (2).

2. Floor arrangement (1) according to claim 1,
wherein each curved floor panel (4) is formed with two straight side edges (7), each of which rests on one respective upper support flange (3) of the two respective adjacent mounting rails (2).

3. Floor arrangement (1) according to claim 1 or 2,
wherein the convex top surface (5) and/or the concave bottom surface (6) of the curved floor panel (4) is curved according to a section of a circumferential surface of a circular cylinder.

4. Floor arrangement (1) according to one of the preceding claims,
wherein each curved floor panel (4) is flattened through fastening of the curved floor panel (4) under tension to the two respective adjacent mounting rails (2).

5. Floor arrangement (1) according to claim 4,
wherein each flattened curved floor panel (4) has a vertical rise in between its side edges (7) of less than 10 millimeters.

6. Floor arrangement (1) according to one of the preceding claims,
wherein the curved floor panels (4) are formed as a composite lay-up structure.

7. Floor arrangement (1) according to one of the preceding claims,
wherein the curved floor panels (4) are formed from fiber-reinforced plastic.

8. Floor arrangement (1) according to claim 7,
wherein the curved floor panels (4) are preformed into a curved configuration and hardened in an autoclave process.

9. Floor arrangement (1) according to one of the preceding claims,
wherein the curved floor panels (4) are formed with a honeycomb structure (8) between the top surface (5) and the bottom surface (6).

10. Floor arrangement (1) according to one of the preceding claims, further comprising:
a sealing (9) being located between the upper support flanges (3) of the mounting rails (2) and the curved floor panels (4).

11. Floor arrangement (1) according to claim 10,
wherein the sealing (9) is formed as a foam profile that has an open-cell or closed-cell structure.

12. Floor arrangement (1) according claim 10 or 11,
wherein the sealing (9) is adhesively fixed to the curved floor panels (4).

13. Floor arrangement (1) according to one of the preceding claims, further comprising:
fasteners (10) fixing the curved floor panels (4) to the upper support flanges (3) of the mounting rails (2).

14. Floor arrangement (1) according to claim 13,
wherein the fasteners (10) are formed as bolts, screws, rivets, pins or plugs.

15. Aircraft or spacecraft comprising a passenger cabin with a floor arrangement (1) according to one of the claims 1 to 14.

## Patentansprüche

1. Bodenanordnung (1) für eine Passagierkabine eines Luftfahrzeugs oder Raumfahrzeugs, welche umfasst:
Montageschienen (2) zum Anbringen von Kabinenausstattungskomponenten, wobei jede Montageschiene (2) wenigstens einen oberen Stützflansch (3) zum Abstützen von Bodenplatten (4) umfasst; und
gekrümmte Bodenplatten (4), welche von Natur aus mit einer konvexen Oberseite (5) und einer konkaven Unterseite (6) ausgebildet sind, wobei jede von Natur aus gekrümmte Bodenplatte (4) an zwei jeweiligen benachbarten Montageschienen (2) angebracht ist und von einem jeweiligen oberen Stützflansch (3) jeder der zwei benachbarten Montageschienen (2) abgestützt wird.

2. Bodenanordnung (1) nach Anspruch 1,
wobei jede gekrümmte Bodenplatte (4) mit zwei geraden Seitenrändern (7) ausgebildet ist, von denen jede auf einem jeweiligen oberen Stützflansch (3) der zwei jeweiligen benachbarten Montageschienen (2) ruht.

3. Bodenanordnung (1) nach Anspruch 1 oder 2,
wobei die konvexe Oberseite (5) und/oder die konkave Unterseite (6) der gekrümmten Bodenplatte (4) gemäß einem Abschnitt einer Umfangsfläche eines Kreiszylinders gekrümmt sind.

4. Bodenanordnung (1) nach einem der vorhergehenden Ansprüche,
wobei jede gekrümmte Bodenplatte (4) durch Befestigen der gekrümmten Bodenplatte (4) unter Spannung an den zwei jeweiligen benachbarten Montageschienen (2) in eine flache Form gebracht wird.

5. Bodenanordnung (1) nach Anspruch 4,
wobei jede in eine flache Form gebrachte gekrümmte Bodenplatte (4) eine vertikale Erhebung zwischen ihren Seitenrändern (7) von weniger als 10 Millimetern aufweist.

6. Bodenanordnung (1) nach einem der vorhergehenden Ansprüche,
wobei die gekrümmten Bodenplatten (4) als Verbundwerkstoffstruktur ausgebildet sind.

7. Bodenanordnung (1) nach einem der vorhergehenden Ansprüche,
wobei die gekrümmten Bodenplatten (4) aus faserverstärktem Kunststoff ausgebildet sind.

8. Bodenanordnung (1) nach Anspruch 7,
wobei die gekrümmten Bodenplatten (4) in eine gekrümmte Konfiguration vorgeformt und in einem Autoklavprozess gehärtet sind.

9. Bodenanordnung (1) nach einem der vorhergehenden Ansprüche,
wobei die gekrümmten Bodenplatten (4) mit einer Wabenstruktur (8) zwischen der Oberseite (5) und der Unterseite (6) ausgebildet sind.

10. Bodenanordnung (1) nach einem der vorhergehenden Ansprüche, welche ferner umfasst:
eine Dichtung (9), die zwischen den oberen Stützflanschen (3) der Montageschienen (2) und den gekrümmten Bodenplatten (4) angeordnet ist.

11. Bodenanordnung (1) nach Anspruch 10,
wobei die Dichtung (9) als ein Schaumstoffprofil ausgebildet ist, welches eine offenzellige oder eine geschlossenzellige Struktur aufweist.

12. Bodenanordnung (1) nach Anspruch 10 oder 11,
wobei die Dichtung (9) an den gekrümmten Bodenplatten (4) adhäsiv befestigt ist.

13. Bodenanordnung (1) nach einem der vorhergehenden Ansprüche, welche ferner umfasst:
Befestigungselemente (10), welche die gekrümmten Bodenplatten (4) an den oberen Stützflanschen (3) der Montageschienen (2) befestigen.

14. Bodenanordnung (1) nach Anspruch 13,
wobei die Befestigungselemente (10) als Bolzen, Schrauben, Niete, Stifte oder Stopfen ausgebildet sind.

15. Luftfahrzeug oder Raumfahrzeug, welches eine Passagierkabine mit einer Bodenanordnung (1) nach einem der Ansprüche 1 bis 14 umfasst.

## Revendications

1. Dispositif de plancher (1) pour une cabine de passagers d'un avion ou d'un engin spatial, comprenant:
des rails de montage (2) pour le montage de composants d'équipement de cabine, chaque rail de montage (2) comprenant au moins une bride de support supérieure (3) pour supporter des panneaux de plancher (4); et
des panneaux de plancher incurvés (4) étant formés de manière inhérente avec une surface supérieure convexe (5) et une surface inférieure concave (6), chaque panneau de plancher incurvé de manière inhérente (4) étant monté sur deux rails de montage adjacents respectifs (2) et étant supporté par une bride de support supérieure respective (3) de chacun des deux rails de montage adjacents (2).

2. Dispositif de plancher (1) selon la revendication 1, dans lequel chaque panneau de plancher incurvé (4) est formé avec deux bords latéraux droits (7), chacun d'eux reposant sur une bride de support supérieure respective (3) des deux rails de montage adjacents respectifs (2) .

3. Dispositif de plancher (1) selon la revendication 1 ou 2, dans lequel la surface supérieure convexe (5) et/ou la surface inférieure concave (6) du panneau de plancher incurvé (4) est incurvée selon une section d'une surface périphérique d'un cylindre circulaire.

4. Dispositif de plancher (1) selon l'une des revendications précédentes, dans lequel chaque panneau de plancher incurvé (4) est aplati par la fixation du panneau de plancher incurvé (4) sous tension aux deux rails de montage adjacents respectifs (2).

5. Dispositif de plancher (1) selon la revendication 4, dans lequel chaque panneau de plancher incurvé (4) aplati présente une élévation verticale entre ses bords latéraux (7) de moins de 10 millimètres.

6. Dispositif de plancher (1) selon l'une des revendications précédentes, dans lequel les panneaux de plancher incurvés (4) sont réalisés sous la forme d'une structure stratifiée composite.

7. Dispositif de plancher (1) selon l'une des revendications précédentes, dans lequel les panneaux de plancher incurvés (4) sont réalisés en matière plastique renforcée par des fibres.

8. Dispositif de plancher (1) selon la revendication 7, dans lequel les panneaux de plancher incurvés (4) sont préformés en une configuration incurvée et durcis dans un procédé en autoclave.

9. Dispositif de plancher (1) selon l'une des revendications précédentes, dans lequel les panneaux de plancher incurvés (4) sont formés avec une structure en nid d'abeilles (8) entre la surface supérieure (5) et la surface inférieure (6).

10. Dispositif de plancher (1) selon l'une des revendications précédentes, comprenant en outre:
une étanchéité (9) étant située entre les brides de support supérieures (3) des rails de montage (2) et les panneaux de plancher incurvés (4).

11. Dispositif de plancher (1) selon la revendication 10, dans lequel l'étanchéité (9) est réalisée sous la forme d'un profilé en mousse qui présente une structure à cellules ouvertes ou fermées.

12. Dispositif de plancher (1) selon la revendication 10 ou 11, dans lequel l'étanchéité (9) est fixée de manière adhésive sur les panneaux de plancher incurvés (4).

13. Dispositif de plancher (1) selon l'une des revendications précédentes, comprenant en outre:
des éléments de fixation (10) fixant les panneaux de plancher incurvés (4) aux brides de support supérieures (3) des rails de montage (2).

14. Dispositif de plancher (1) selon la revendication 13, dans lequel les éléments de fixation (10) sont réalisés sous forme de boulons, vis, rivets, goupilles ou chevilles.

15. Avion ou engin spatial comprenant une cabine de passagers avec un dispositif de plancher (1) selon l'une des revendications 1 à 14.
